# FASCICULE DE BREVET EUROPEEN

(11) **EP 3 104 698 B1**
(45) Date de publication et mention de la délivrance du brevet: **30.10.2019**
(21) Numéro de dépôt: 15704535.2
(22) Date de dépôt: 13.02.2015
(51) Int. Cl.: A01K 85/00, A01K 85/16

(54) **LEURRE DE PECHE**
ANGELKÖDER
FISHING LURE

(30) Priorité: 13.02.2014 FR 1400398
(43) Date de publication de la demande: 21.12.2016
(73) Titulaire: Fiiish, 29490 Guipavas (FR)
(72) Inventeur: GUENNAL, Matthieu, 29100 Douarnenez Treboul (FR)
(74) Mandataire: Ipside
(86) Numéro de dépôt international: PCT/EP2015/053064
(87) Numéro de publication internationale: WO 2015/121405

(56) Documents cités:
- FR-A- 1 148 408
- FR-A1- 2 672 773
- FR-A1- 2 691 043
- US-A- 5 930 941
- US-A1- 2009 133 314
- US-B1- 6 182 391
- US-B1- 7 774 974

## Description

### DOMAINE TECHNIQUE DE L'INVENTION

La présente invention concerne un leurre de pêche pour imiter la nage d'un poisson servant d'appât aux poissons pour la pêche à la ligne.

### ETAT DE LA TECHNIQUE

Le document GB2029181 décrit un leurre de pêche comprenant une tête rigide et un corps en matière souple. Ce leurre a une forme allongée avec un corps souple droit à l'exception d'un déflecteur positionné vers le bas. Toutefois, ce leurre de l'art antérieur, ne présente pas une nage ayant une grande amplitude de mouvement, et ainsi n'imite pas correctement la nage d'un vrai poisson, tel qu'un lançon dont l'amplitude du mouvement, de gauche à droite ou inversement, est nettement plus importante.

Les documents US5930941, US2009/133314 et FR2691043 représentent d'autres exemples d'art antérieur avec les mêmes inconvénients d'avoir une amplitude de mouvement faible.

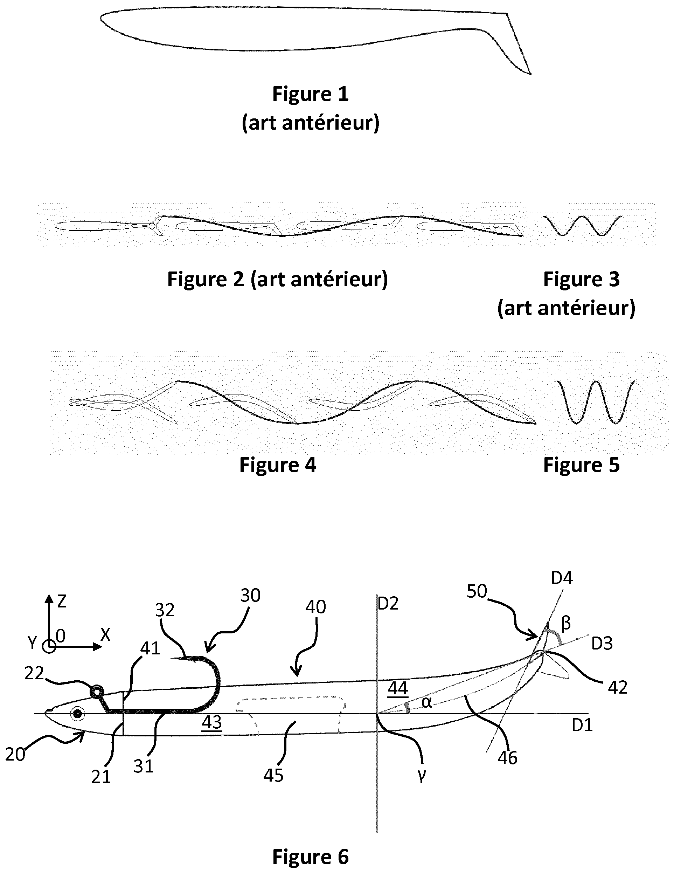

La figure 1, relative à l'art antérieur, représente un schéma d'un exemple d'un leurre. Le leurre a un corps sensiblement droit s'étendant selon un axe longitudinal et un déflecteur, ou nageoire, orienté vers le bas.

La figure 2, relative à l'art antérieur, montre une représentation de la nage d'un leurre lorsqu'il est tiré par une ligne de pêche. L'amplitude du mouvement du leurre est mesurée au niveau du déflecteur à l'extrémité du corps souple la plus éloignée de ce déflecteur. Ledit déflecteur empêche le leurre d'être tiré en ligne droite et crée une oscillation de gauche à droite, ce qui imite la nage d'un poisson.

La figure 3, également relative à l'art antérieur, représente l'amplitude de l'oscillation d'un leurre selon l'art antérieur. Cette amplitude correspond à deux fois la longueur mesurée de la hauteur du déflecteur dans le plan de symétrie du leurre. Cette figure montre une courbe qui descend une première fois et remonte ensuite, ce motif est répété une fois. Selon l'art antérieur cette amplitude n'est pas suffisante pour imiter un vrai poisson.

### OBJET DE L'INVENTION

La présente invention vise à remédier aux inconvénients de l'art antérieur.

A cet effet, la présente invention vise un leurre de pêche, lequel comporte :
- une tête rigide constituée d'une section arrière plane et d'un moyen de fixation d'une ligne de pêche,
- un hameçon comportant une hampe fixée au niveau de la section arrière de la tête et s'étendant selon l'axe longitudinal du leurre,
- un corps souple s'étendant entre une extrémité avant et une extrémité arrière, l'extrémité avant étant plane et appuyée contre ladite section arrière de la tête rigide, l'extrémité avant a une section sensiblement égale à la section arrière de la tête rigide,
   le corps souple comportant,
   une première partie cylindrique s'étendant sensiblement selon l'axe longitudinal du leurre et comprenant un évidement, et une deuxième partie courbée s'étendant entre la première partie et l'extrémité arrière,
   l'axe longitudinal sépare le leurre en une partie supérieure et une partie inférieure, la partie supérieure comprend l'hameçon, le moyen de fixation de la ligne de pêche, la deuxième partie du corps souple, la partie inférieure comprend l'évidement,
- un déflecteur vers le haut s'étendant dans un plan transversal par rapport au corps souple, le déflecteur étant fixé à l'extrémité arrière du corps souple et augmentant la courbure de la deuxième partie vers le haut par rapport à une ligne centrale de courbure de la deuxième partie du corps souple.

Grâce à ces dispositions, lorsque l'utilisateur tire sur la ligne de pêche reliée au moyen de fixation la pression de l'eau contraint le déflecteur à déplacer le corps souple de gauche à droite imitant la nage d'un poisson vivant. Le déflecteur modifie la direction d'un courant liquide. L'amplitude du mouvement de gauche à droite est augmentée par rapport à un leurre ayant un corps souple droit et un déflecteur vers le bas.

La continuité de la forme de la tête avec le corps soupe permet d'avoir une forme hydrodynamique sans discontinuité ce qui permet d'imiter la nage d'un poisson.

Le leurre imite la nage d'un poisson, notamment les poissons filiformes comme par exemple le lançon. Dans un autre mode de réalisation, le leurre imite un poisson plus compact comme un gardon.

La tête rigide est solidaire de l'hameçon dont sa pointe dépasse le corps souple, ce qui par gravité maintien le leurre dans le bon sens.

Dans un mode de réalisation, le moyen de fixation est un anneau.

Dans des modes de réalisation, un premier angle est défini dans le plan vertical du leurre entre l'axe longitudinal du leurre et un premier axe passant par :
- le point d'inflexion du début de la courbure de la ligne centrale de la deuxième partie du corps souple et
- le point d'intersection entre la ligne centrale de courbure de la deuxième partie du corps souple et l'extrémité arrière du corps souple,
le premier angle étant compris entre 10 et 30°, de préférence 20°.

L'inventeur à découvert que plus l'angle du premier angle définissant la courbure est important, plus il y a de contrainte et moins la nage est naturelle. A l'inverse moins il y a d'angle, moins il y a de contrainte et moins il y a d'amplitude de la nage.

Dans des modes de réalisation, un deuxième angle est défini entre le premier axe et un deuxième axe défini par l'intersection du plan vertical du leurre et un plan passant par l'extrémité du déflecteur et parallèle au plan médian du déflecteur, le deuxième angle étant compris entre 55 et 75°, de préférence 65°.

L'inventeur à également découvert que plus l'angle du deuxième angle définissant le déflecteur est important, plus il y a de contrainte et moins la nage est naturelle. A l'inverse moins il y a d'angle, moins il y a de contrainte et moins il y a d'amplitude de la nage.

Dans des modes de réalisation, l'évidement comprend une capsule de verre bruiteuse.

Grace à la capsule de verre bruiteuse, « rattle » en anglais, le leurre de pêche attire les poissons.

Dans des modes de réalisation, la longueur de la hauteur de la section arrière de la tête rigide est égale ou supérieure à la longueur de la hauteur du déflecteur.

L'inventeur à découvert également que la longueur de la largeur du déflecteur respectant cette dimension crée un mouvement de gauche à droite pour imiter correctement la nage d'un poisson, tel qu'un lançon.

Dans des modes de réalisation, le corps souple est imprégné d'un produit appétant.

Un produit appétant favorise la pêche puisqu'il attire les poissons. Le corps souple est imprégné d'une formule attractante, par exemple parfumé à l'anis, ce qui attire les poissons.

Dans des modes de réalisation, l'axe longitudinal sépare le leurre en une partie supérieure et une partie inférieure, la partie supérieure comprend l'hameçon, le moyen de fixation de la ligne de pêche, la deuxième partie du corps souple, la partie inférieure comprend l'évidement.

Grace à la position de l'évidement, l'écoulement du courant d'eau ne crée pas de turbulence, lors de sa mise en œuvre. L'hameçon maintien le corps souple et la partie courbée vers le haut de sorte à éviter que le corps souple tourne sur lui-même.

Dans des modes de réalisation, l'évidement se situe sur les côtés latéraux du leurre.

### BREVE DESCRIPTION DES FIGURES

D'autres avantages, buts et caractéristiques de la présente invention ressortiront de la description qui va suivre faite, dans un but explicatif et nullement limitatif, en regard des dessins annexés, dans lesquels :
- la figure 1 montre, en vue de côte, une représentation d'un mode de réalisation selon l'art antérieur,
- la figure 2, relative à l'art antérieur, montre, en vue de côte, une représentation de l'imitation de la nage du leurre de la figure 1 lors de sa mis en œuvre,
- la figure 3 représente, un schéma de l'oscillation du leurre selon l'art antérieur,
- la figure 4 montre, en vue de côte, une représentation de l'imitation de la nage du leurre lors de sa mis en œuvre,
- la figure 5 représente un schéma de l'oscillation selon un mode de réalisation du leurre de pêche objet de la présente invention,
- les figures 6 et 7 représentent, en vue de côté, un mode de réalisation du leurre de pêche objet de la présente invention,
- la figure 8 représente une vue partielle montrant un déflecteur selon un mode de réalisation du leurre objet de l'invention,
- la figure 9 représente une vue en coupe B-B selon l'axe visible à la figure 7,
- la figure 10 représente une vue du dessous selon un mode de réalisation du leurre objet de l'invention,
- la figure 11 représente une vue en coupe selon un plan passant par la section arrière de la tête rigide selon un mode de réalisation,
- la figure 12 représente une vue en coupe selon un plan transversal passant dans la courbure de la deuxième partie du corps souple selon un mode de réalisation,
- la figure 13 représente une vue du dessus selon un mode de réalisation,
- la figure 14 représente la différence entre la section du corps souple visible à la figure 12 et la section du corps souple visible à la figure 13,
- la figure 15 représente, une vue de côté, un autre mode de réalisation du leurre de pêche objet de la présente invention,
- la figure 16 représente, une vue de dessus, un autre mode de réalisation du leurre de pêche objet de la présente invention,
- la figure 17 représente, une vue en perspective, un mode de réalisation du leurre de pêche objet de la présente invention,
- la figure 18 représente une autre vue en perspective d'un mode de réalisation du leurre de pêche objet de la présente invention,

### DESCRIPTION D'EXEMPLES DE REALISATION DE L'INVENTION

Les figures 1 à 3 ont été décrites précédemment.

La figure 4 représente la nage du leurre pris à différents instants pour observer ses mouvements de gauche à droite.

La figure 5 montre que l'amplitude du mouvement correspond à la longueur de la moitié du corps souple 40, ce qui est le double de l'amplitude de l'état de la technique. L'oscillation du leurre est plus importante et représente une courbe qui descend une première fois et remonte ensuite, ce motif est répété une fois. L'inventeur a découvert que cette amplitude optimise la pêche en augmentant le nombre de touche et de prise de poisson. Le mouvement du leurre imite la nage d'un vrai poisson puisque tout le leurre est en mouvement.

Figure 6, selon un mode de réalisation particulier du leurre objet de l'invention celui-ci comprend une tête rigide 20 présentant une section arrière 21 et un moyen de fixation 22 d'une ligne de pêche. La tête rigide 20 est de la forme d'une tête de poisson avec un œil et une bouche.

Le moyen de fixation 22 est un anneau dans lequel une ligne de pêche est prévue d'être insérée. Il est représenté également la forme de l'hameçon 30 : droit à œil. La pointe 32 de l'hameçon sort et est à l'extérieur du corps souple 40.

L'hameçon 30 comporte une hampe (partie droite) 31 fixée au niveau de la section arrière 21 et s'étend selon un axe longitudinal du leurre. L'hameçon 30 est solidaire de la tête 20 par une liaison encastrement.

Le leurre comprend également un corps souple 40 qui s'étend entre une extrémité avant 41 et une extrémité arrière 42. L'extrémité avant 41 est positionnée au niveau de la section arrière 21 de la tête rigide 20. La section arrière est une surface plane et l'extrémité avant 41 comporte une surface plane qui coïncide avec la section arrière 21 en formant une liaison en appui plan. De cette façon, il n'y pas de discontinuité entre la tête rigide 20 et le corps souple 40.

L'extrémité avant 41 a une section sensiblement égale à la section arrière 21 de la tête rigide 20. Autrement dit, les dimensions de la section arrière 21 de la tête rigide 20 et de l'extrémité avant 41 sont identiques pour être appuyées l'une contre l'autre.

Toujours à la figure 6, on observe un repère OXZ qui définit les plans du leurre. Le plan de symétrie du leurre (suivant le plan OXZ) est perpendiculaire au plan horizontal (suivant le plan OXY), et perpendiculaire au plan transversal (suivant le plan OYZ). Le plan horizontal est confondu avec le plan longitudinal passant par l'axe longitudinal du leurre.

Le corps souple 40 comporte deux parties séparées par la droite D2.

Une première partie 43 cylindrique s'étend sensiblement selon l'axe longitudinal du leurre et comprenant un évidement 45.

Une deuxième partie 44 du corps souple 40 est courbée.

Le corps souple 40 comporte un déflecteur 50 qui s'étend dans un plan transversal. Le déflecteur 50 est fixé à l'extrémité arrière 42 du corps souple 40 et augmente la courbure de la deuxième partie 44 par rapport à une ligne centrale de courbure 46 de la deuxième partie 44 du corps souple 40.

Toujours à la figure 6, deux angles α et β sont définis.

Le premier angle α est défini dans le plan vertical du leurre entre l'axe longitudinal du leurre et un premier axe passant par :
- le point d'inflexion γ du début de la courbure de la ligne centrale 46 de la deuxième partie 44 du corps souple 40 et
- le point d'intersection entre la ligne centrale de courbure 46 de la deuxième partie 44 du corps souple 40 et l'extrémité arrière 42 du corps souple 40.
Tel que représenté dans sur cette figure, le premier angle α est de 20° (compris entre 10 et 30°)

Le deuxième angle β est défini entre le premier axe défini ci-dessus et un deuxième axe défini par l'intersection du plan vertical du leurre et un plan passant par l'extrémité du déflecteur 50 et parallèle au plan médian du déflecteur 50.

Le deuxième axe est défini par l'intersection du plan vertical du leurre et le plan médian du déflecteur 50. Le deuxième angle β est de 65° (compris entre 55 et 75°).

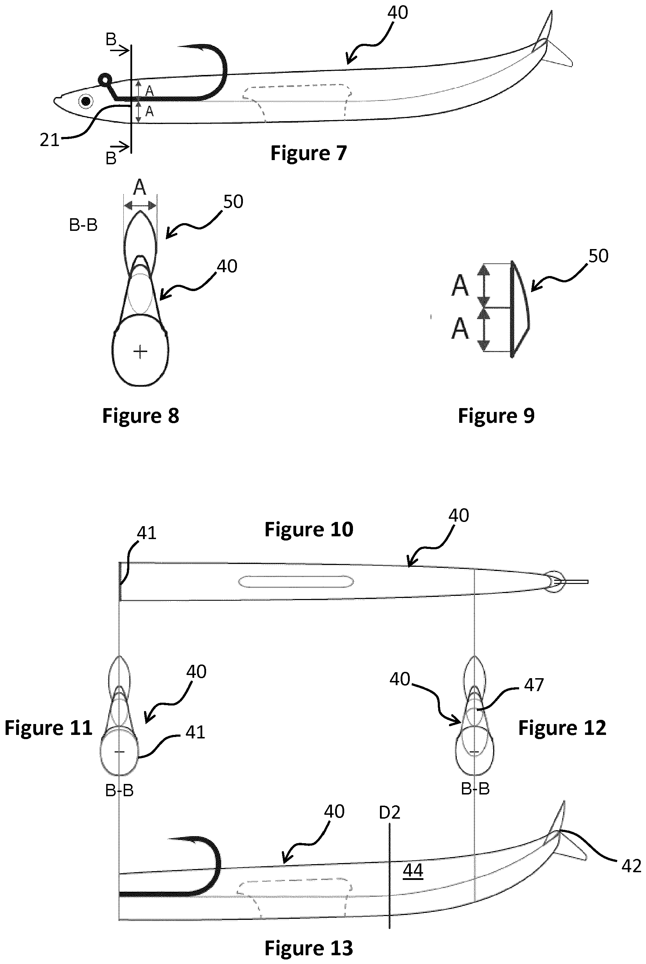

Les figures 7, 8 et 9 montrent des proportions du leurre.

Sur la figure 7, la référence A montre la longueur de la moitié de la section arrière 21 de leurre. Cette figure montre le plan de coupe des figures 8, 11 et 12, noté B-B.

La référence A de la figure 8 montre la largeur du déflecteur 50 par rapport au corps souple 40. La forme du déflecteur est fusiforme, dont la forme rappelle celle d'un fuseau (allongée et renflée au centre).

La figure 9 montre une vue partielle du déflecteur 50. La référence A montre la longueur de la hauteur du déflecteur 50. La hauteur du déflecteur 50 est définie d'une part avec l'extrémité distale du corps souple 40 et l'extrémité proximale du corps souple 40. La hauteur du déflecteur 50 correspond à la hauteur de la section arrière 21 dans le plan de symétrie du leurre.

Les figures 10 à 14, montrent une différence de section du corps souple 40. L'extrémité avant 41 du corps souple 40 est égale à la section arrière 21 de la tête rigide 20. L'extrémité avant 41 (égale à la section arrière 21) est comparée à une section transversale 47 passant par le point milieu de la courbure de la deuxième partie 44 du corps souple 40. La ligne de courbure commence au point d'intersection avec la droite D2 et s'arrête à l'extrémité arrière 42 du corps souple 40.

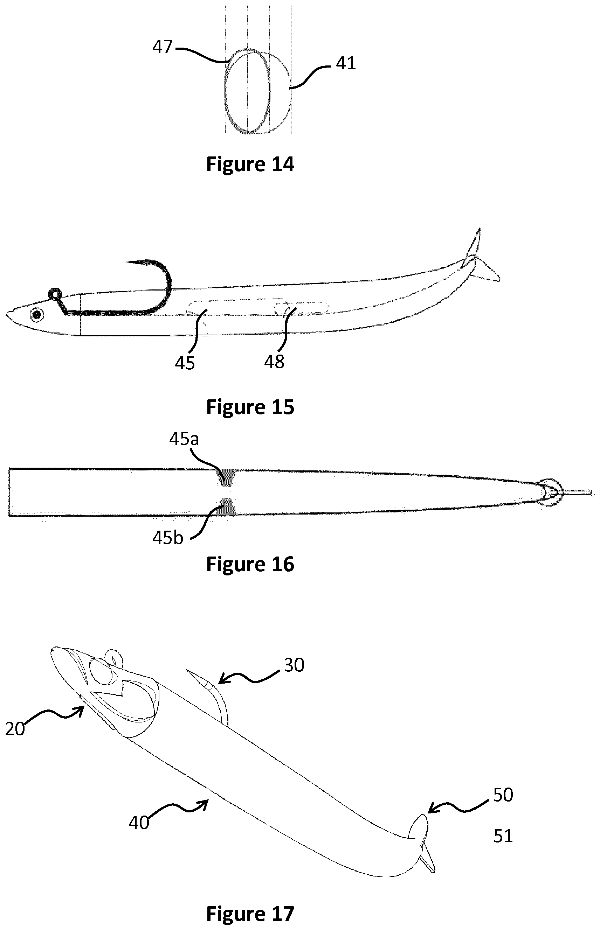

A la figure 14, la largeur de la section transversale 47 correspond au deux tiers de la largeur de l'extrémité avant 41.

Comme on l'observe en figure 15, l'évidement 45 comprend une capsule de verre bruiteuse. La capsule de verre bruiteuse est positionnée dans la partie de l'évidement 45 à proximité de la deuxième partie 44 du corps souple 40 et s'étend dans un axe parallèle à l'axe longitudinal.

Comme on l'observe en figure 16, les évidements 45a et 45b sont sur le côté du leurre, visible dans le plan horizontal (vue de dessus).

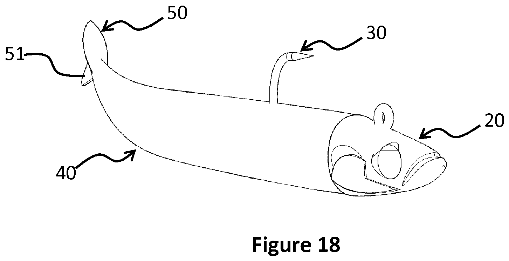

Les figures 17 et 18 montrent deux vues en perspective du leurre selon un mode de réalisation. Ces deux figures montrent la tête rigide 20, l'hameçon 30, le corps souple 40 et le déflecteur 50.

Ces figures montrent également une nageoire 51 positionnée en dessous du déflecteur 50.

Ces figures montrent également la reproduction d'une vraie tête d'un poisson sur lesquelles la tête est visible avec une bouche, un œil et des branchies.

### NOMENCLATURE

- 20: tête rigide
- 21: section arrière
- 22: moyen de fixation d'une ligne de pêche

- 30: hameçon
- 31: hampe
- 32: pointe

- 40: corps souple
- 41: extrémité avant
- 42: extrémité arrière
- 43: première partie
- 44: deuxième partie
- 45: évidement 45a et 45b évidement sur les côtés du leurre
- 46: ligne centrale de courbure
- 47: section transversale
- 48: capsule de verre bruiteuse

- 50: déflecteur

- D1: axe longitudinal
- D2: droite qui sépare le corps souple en deux parties
- D3: premier axe
- D4: deuxième axe

## Revendications

1. Leurre de pêche pour imiter la nage d'un poisson, comportant:
- une tête rigide (20) constituée d'une section arrière (21) plane et d'un moyen de fixation d'une ligne de pêche (22),
- un hameçon (30) comportant une hampe (31) fixée au niveau de la section arrière (21) de la tête et s'étendant selon un axe longitudinal (D1) du leurre,
- un corps souple (40) s'étendant entre une extrémité avant (41) et une extrémité arrière (42), l'extrémité avant (41) étant plane et appuyée contre ladite section arrière (21) de la tête rigide (20), l'extrémité avant (41) ayant une section sensiblement égale à la section arrière (21) de la tête rigide (20),
le corps souple (40) comportant,
- une première partie (43) cylindrique s'étendant sensiblement selon l'axe longitudinal (D1) du leurre et comprenant un évidement (45), et une deuxième partie (44) courbée s'étendant entre la première partie et l'extrémité arrière,
où l'axe longitudinal (D1) sépare le leurre en une partie supérieure et une partie inférieure, la partie supérieure comprend l'hameçon (30), le moyen de fixation (22) de la ligne de pêche et la deuxième partie (44) du corps souple (40), la partie inférieure comprend l'évidement (45) et
- un déflecteur (50) vers le haut s'étendant dans un plan transversal par rapport au corps souple, le déflecteur (50) étant fixé à l'extrémité arrière (42) du corps souple (40) et augmentant la courbure de la deuxième partie vers le haut (44) par rapport à une ligne centrale de courbure (46) de la deuxième partie (44) du corps souple (40).

2. Leurre de pêche selon la revendication 1, dans lequel un premier angle (α) est défini dans le plan vertical du leurre entre l'axe longitudinal (D1) du leurre et un premier axe (D3) passant par :
- le point d'inflexion (γ) du début de la courbure de la ligne centrale (46) de la deuxième partie (44) du corps souple (40) et
- le point d'intersection entre la ligne centrale de courbure (46) de la deuxième partie (44) du corps souple (40) et l'extrémité arrière (42) du corps souple (40),
le premier angle (α) étant compris entre 10 et 30°, de préférence 20°.

3. Leurre de pêche selon l'une des revendications 1 à 2, dans lequel un deuxième angle (β) est défini entre le premier axe et un deuxième axe défini par l'intersection du plan vertical du leurre et un plan passant par l'extrémité du déflecteur (50) et parallèle au plan médian du déflecteur (50), le deuxième angle (β) étant compris entre 55 et 75°, de préférence 65°.

4. Leurre de pêche selon l'une des revendications 1 à 3, dans lequel l'évidement (45) comprend une capsule de verre bruiteuse.

5. Leurre de pêche selon l'une des revendications 1 à 4, dans lequel la longueur de la hauteur de la section arrière (21) de la tête rigide (20) est égale ou supérieure à la longueur de la hauteur du déflecteur.

6. Leurre de pêche selon l'une des revendications 1 à 5, dans lequel la moitié de la longueur de la hauteur de la section arrière (21) de la tête rigide (20) est égale ou supérieure à la longueur de la largeur du déflecteur.

7. Leurre de pêche selon l'une des revendications 1 à 5, dans lequel le corps souple est imprégné d'un produit appétant.

8. Leurre de pêche selon l'une des revendications 1, dans lequel la forme du déflecteur (50) est fusiforme.

## Patentansprüche

1. Angelköder zum Imitieren des Schwimmens eines Fisches, umfassend
- einen starren Kopf (20), der aus einem ebenen Hinterabschnitt (21) und einem Befestigungsmittel für eine Angelleine (22) besteht,
- einen Angelhaken (30), der einen auf Höhe des Hinterabschnitts (21) des Kopfes befestigten Schaft (31) umfasst und sich entlang einer Längsachse (D1) des Köders erstreckt,
- einen flexiblen Körper (40), der sich zwischen einem Vorderende (41) und einem Hinterende (42) erstreckt, wobei das Vorderende (41) eben ist und gegen den Hinterabschnitt (21) des starren Kopfes (20) anliegt, wobei das Vorderende (41) einen Abschnitt aufweist, im Wesentlichen gleich dem Hinterabschnitt (21) des starren Kopfes (20),
wobei der flexible Körper (40) Folgendes umfasst
- einen ersten zylindrischen Teil (43), der sich im Wesentlichen entlang der Längsachse (D1) des Köders erstreckt und eine Aussparung (45) beinhaltet, und einen zweiten gekrümmten Teil (44), der sich zwischen dem ersten Teil und dem Hinterende erstreckt,
wobei die Längsachse (D1) den Köder in einen oberen Teil und einen unteren Teil trennt, wobei der obere Teil den Angelhaken (30), das Befestigungsmittel (22) für die Angelleine und den zweiten Teil (44) des flexiblen Körpers (40) beinhaltet, wobei der untere Teil die Aussparung (45) beinhaltet, und
- einen Deflektor (50) nach oben, der sich bezogen auf den flexiblen Körper in einer Querebene erstreckt, wobei der Deflektor (50) an dem Hinterende (42) des flexiblen Körpers (40) befestigt ist und die Krümmung des zweiten Teils nach oben (44), bezogen auf eine Mittellinie der Krümmung (46) des zweiten Teils (44) des flexiblen Körpers (40), steigert.

2. Angelköder nach Anspruch 1, wobei ein erster Winkel (α) in der vertikalen Ebene des Köders, zwischen der Längsachse (D1) des Köders und einer ersten Achse (D3) definiert ist, die durch Folgendes hindurchgeht:
- den Wendepunkt (γ) des Beginns der Krümmung der Mittellinie (46) des zweiten Teils (44) des flexiblen Körpers (40) und
- den Schnittpunkt zwischen der Mittellinie der Krümmung (46) des zweiten Teils (44) des flexiblen Körpers (40) und dem Hinterende (42) des flexiblen Körpers (40),
wobei der erste Winkel (α) im Bereich zwischen 10 und 30º, vorzugsweise 20º, liegt.

3. Angelköder nach einem der Ansprüche 1 bis 2, wobei ein zweiter Winkel (β) zwischen der ersten Achse und einer zweiten Achse definiert ist, die durch die Überschneidung der vertikalen Ebene des Köders und einer Ebene, die durch das Ende des Deflektors (50) und parallel zur Mittelebene des Deflektors (50) hindurchgeht, definiert ist, wobei der zweite Winkel (β) im Bereich zwischen 55 und 75º, vorzugsweise 65º, liegt.

4. Angelköder nach einem der Ansprüche 1 bis 3, wobei die Aussparung (45) eine rasselnde Glaskapsel beinhaltet.

5. Angelköder nach einem der Ansprüche 1 bis 4, wobei die Länge der Höhe des Hinterabschnitts (21) des starren Kopfes (20) gleich oder größer als die Länge der Höhe des Deflektors ist.

6. Angelköder nach einem der Ansprüche 1 bis 5, wobei die Hälfte der Länge der Höhe des Hinterabschnitts (21) des starren Kopfes (20) gleich oder größer als die Länge der Breite des Deflektors ist.

7. Angelköder nach einem der Ansprüche 1 bis 5, wobei der flexible Körper mit einem schmackhaften Produkt imprägniert ist.

8. Angelköder nach einem der Ansprüche 1, wobei die Form des Deflektors (50) spindelförmig ist.

## Claims

1. Fishing lure for imitating the swimming of a fish, comprising:
- a rigid head (20) consisting of a flat rear section (21) and of a means for fastening a fishing line (22),
- a fishhook (30) comprising a shank (31) fastened at the rear section (21) of the head and extending according to a longitudinal axis (D1) of the lure,
- a flexible body (40) extending between a front end (41) and a rear end (42), the front end (41) being flat and pressed against said rear section (21) of the rigid head (20), the front end (41) having a cross-section substantially equal to the rear section (21) of the rigid head (20),
the flexible body (40) comprising,
- a first cylindrical portion (43) extending substantially according to the longitudinal axis (D1) of the lure and comprising a recess (45), and a second curved portion (44) extending between the first portion and the rear end,
wherein the longitudinal axis (D1) separates the lure into an upper portion and a lower portion, the upper portion comprises the fishhook (30), the means (22) for fastening the fishing line and the second portion (44) of the flexible body (40), the lower portion comprises the recess (45), and
- an upwards deflector (50) extending in a plane transverse with respect to the flexible body, the deflector (50) being fastened to the rear end (42) of the flexible body (40) and increasing the curvature of the second portion upwards (44) with respect to a central line of curvature (46) of the second portion (44) of the flexible body (40).

2. Fishing lure according to claim 1, wherein a first angle (α) is defined in the vertical plane of the lure between the longitudinal axis (D1) of the lure and a first axis (D3) passing through:
- the point of inflection (γ) of the beginning of the curvature of the central line (46) of the second portion (44) of the flexible body (40) and
- the point of intersection between the central line of curvature (46) of the second portion (44) of the flexible body (40) and the rear end (42) of the flexible body (40), the first angle (α) being between 10 and 30°, preferably 20°.

3. Fishing lure according to one of claims 1 to 2, wherein a second angle (β) is defined between the first axis and a second axis defined by the intersection of the vertical plane of the lure and a plane passing through the end of the deflector (50) and parallel to the median plane of the deflector (50), the second angle (β) being between 55 and 75°, preferably 65°.

4. Fishing lure according to one of claims 1 to 3, wherein the recess (45) comprises a noise-making glass capsule.

5. Fishing lure according to one of claims 1 to 4, wherein the length of the height of the rear section (21) of the rigid head (20) is equal to or greater than the length of the height of the deflector.

6. Fishing lure according to one of claims 1 to 5, wherein half the length of the height of the rear section (21) of the rigid head (20) is equal to or greater than the length of the width of the deflector.

7. Fishing lure according to one of claims 1 to 5, wherein the flexible body is impregnated with an appetite-stimulating product.

8. Fishing lure according to one of claims 1, wherein the shape of the deflector (50) is fusiform.
